# EUROPEAN PATENT APPLICATION

(11) **EP 4 521 768 A1**
(43) Date of publication of application: **12.03.2025**
(21) Application number: 23815022.1
(22) Date of filing: 23.05.2023
(51) Int. Cl.: H04N 25/441

(54) **CHIP, DYNAMIC VISION SENSOR AND METHOD FOR OUTPUTTING PIXEL INFORMATION**

(30) Priority: 31.05.2022 CN 202210610044
(71) Applicant: Huawei Technologies Co., Ltd., Shenzhen, Guangdong 518129 (CN); INSTITUTE OF SEMICONDUCTORS, CHINESE ACADEMY OF SCIENCES, Beijing 100083 (CN)
(72) Inventor: ZHANG, Ziyang, Shenzhen, Guangdong 518129 (CN); WANG, Yaoyuan, Shenzhen, Guangdong 518129 (CN); LIU, Liyuan, Beijing 100083 (CN); KANG, Lei, Beijing 100083 (CN); LIAO, Jianxing, Shenzhen, Guangdong 518129 (CN); WANG, Ying, Shenzhen, Guangdong 518129 (CN); HUANG, Heming, Shenzhen, Guangdong 518129 (CN)
(74) Representative: Körber, Martin Hans
(86) International application number: PCT/CN2023/095785
(87) International publication number: WO 2023/231838

(57) **Abstract**

This application provides a chip, a dynamic vision sensor, and a method for outputting pixel information. The chip includes a pixel array and a processing circuit, and each pixel row in the pixel array includes at least two pixel groups. In the processing circuit, based on a change of a light intensity value of at least one pixel in a first pixel group, a first signal including row location information of the first pixel group in the pixel array is generated, and a second signal including column location information of a pixel row in which the first pixel group is located is generated. The first signal and the second signal are sent to a pixel output circuit, to enable the pixel output circuit to accurately output location information of the first pixel group whose light intensity value changes in the pixel array.

## Description

### CROSS-REFERENCE TO RELATED APPLICATIONS

This application claims priority to Chinese Patent Application No. 202210610044.0, filed with the China National Intellectual Property Administration on May 31, 2022 and entitled "CHIP, DYNAMIC VISION SENSOR, AND METHOD FOR OUTPUTTING PIXEL INFORMATION", which is incorporated herein by reference in its entirety.

### TECHNICAL FIELD

This application relates to the field of communication technologies, and in particular, to a chip, a dynamic vision sensor, and a method for outputting pixel information.

### BACKGROUND

Currently, after a pixel array of a dynamic vision sensor (dynamic vision sensor, DVS) receives an illumination signal and performs imaging, a pixel whose light intensity value changes is defined as an active pixel, and a pixel whose light intensity value does not change is defined as an inactive pixel. A DVS that outputs pixel information of an active pixel usually includes a row arbitration circuit and a column arbitration circuit.

A method for outputting an active pixel by a frame-based DVS is outputting pixel information of each pixel in a pixel array by the DVS when a clock signal of the row arbitration circuit is synchronized with a clock signal of the column arbitration circuit. However, after the pixel information of the pixel array of the DVS is output, only the pixel information of the active pixel is valid information. Consequently, the DVS uses the frame-based output method to output a result of a large amount of data, and the output result is inaccurate.

### SUMMARY

In view of this, this application provides a chip, a dynamic vision sensor, and a method for outputting pixel information, to accurately output location information of a pixel whose light intensity value changes in a pixel array.

According to a first aspect, this application provides a chip, including a pixel array and a processing circuit. Each pixel row in the pixel array includes at least two pixel groups, and each pixel group includes a plurality of pixels. The processing circuit is configured to: when it is detected that a light intensity value of at least one pixel in a first pixel group changes, generate a first signal. The first signal includes row location information of the first pixel group in the pixel array, and the first pixel group is any pixel group in the pixel array. The processing circuit is further configured to: generate a second signal, where the second signal includes column location information of a pixel row in which the first pixel group is located; and send the first signal and the second signal to a pixel output circuit, where the first signal and the second signal are used to enable the pixel output circuit to output location information of the first pixel group whose light intensity value changes in the pixel array.

In comparison with the conventional technology, in this application, a pixel whose light intensity value changes is output by using a pixel group in a pixel array, so that a more accurate output result can be obtained.

In a possible design, a quantity of pixel groups included in each pixel row in the pixel array is determined in the following manner: for each preset initial quantity of groups, determining, based on a column quantity of the pixel array, a bit width of a pixel, and a quantity of first pixel groups in the pixel array, an amount of pixel data corresponding to the initial quantity of groups; and determining that an initial quantity of groups corresponding to a minimum amount of pixel data in each amount of pixel data is the quantity of pixel groups included in each pixel row. In this application, the initial quantity of groups determined based on the minimum amount of pixel data is used as the quantity of pixel groups included in each pixel row. This enables a bit width that is of a pixel group output by the pixel output circuit and that is in pixel array space to be more reasonable, and helps restore the pixel groups to a frame format.

In a possible design, the pixel array includes M*N pixels, M is a quantity of rows of the pixel array, N is a quantity of columns of the pixel array, and both M and N are positive integers. Different pixel arrays can be obtained by setting different values for quantities of rows and quantities of columns of the pixel arrays.

In a possible design, the processing circuit is specifically configured to: when a changed light intensity value of a pixel in the first pixel group is greater than a preset threshold, determine that the light intensity value of the pixel changes. The preset threshold is any value from 5% of the pixel light intensity value to 30% of the pixel light intensity value. The first signal of the processing circuit indicates that the light intensity value of the first pixel group changes. The preset threshold is set to enable the first signal generated in the processing circuit to be more accurate, and further, a pixel whose light intensity value changes can be output more accurately.

In a possible design, the processing circuit is specifically configured to send a light intensity value of each pixel in the first pixel group to the pixel output circuit by using the first signal or the second signal, to enable the pixel output circuit to output the light intensity value of each pixel in the first pixel group. The location information of the first pixel group in the pixel array is combined with light intensity value information of each pixel in the first pixel group, to enable the output result to be more accurate.

In a possible design, the processing circuit is specifically configured to: determine a pixel signal of each pixel in the first pixel group, where a pixel signal of a first pixel in the first pixel group indicates whether a light intensity value of the first pixel changes, and the first pixel is any pixel in the first pixel group; and perform logical computation on the pixel signal of each pixel in the first pixel group to obtain the first signal. The more accurate first signal may be obtained by using the pixel signal of each pixel in the first pixel group, and further, a pixel whose light intensity value changes may be output more accurately.

In a possible design, the processing circuit is specifically configured to: after sending the first signal to the pixel output circuit, receive a response signal that is sent by the pixel output circuit and that is of the first signal; and send the second signal to the pixel output circuit based on the response signal of the first signal. An output rate of the pixel output circuit may be controlled by sending the second signal based on the response signal of the first signal.

In a possible design, the chip further includes a row arbitration circuit. The row arbitration circuit is further configured to: determine, based on the row location information that is included in the first signal and that is of the first pixel group in the pixel array and row location information that is included in a third signal and that is of a second pixel group in the pixel array, a sequence of processing the first signal and the third signal, and process the first signal and the third signal based on the sequence. The third signal indicates that a light intensity value of the second pixel group changes, and the second pixel group and the first pixel group belong to different pixel rows.

In a possible design, the row arbitration circuit includes a subarbiter and a processor. The subarbiter is configured to determine, based on the row location information that is included in the first signal and that is of the first pixel group in the pixel array and the row location information that is included in the third signal and that is of the second pixel group in the pixel array, the sequence of processing the first signal and the third signal. The processor is configured to process the first signal and the third signal based on the sequence.

In a possible design, the chip further includes a row arbitration circuit. The row arbitration circuit is configured to: receive the first signal and at least one third signal that are sent by the processing circuit, where the third signal indicates that a light intensity value of a second pixel group changes, and the second pixel group and the first pixel group belong to different pixel rows; separately generate the response signal of the first signal and a response signal of the third signal; determine a first sequence of sending the response signal of the first signal and the response signal of the third signal to the processing circuit; and send the response signal of the first signal and the response signal of the third signal to the processing circuit based on the first sequence, to enable the processing circuit to send the second signal to the pixel output circuit; and send a fourth signal to the pixel output circuit, where the fourth signal includes column location information of the pixel row in which the second pixel group is located.

In this application, the execution sequence of the first signal and the third signal is determined by using the row arbitration circuit in the chip, to enable the processing circuit to send the second signal and the fourth signal to the pixel output circuit based on the execution sequence, so that an output rate of the pixel output circuit may be controlled.

In a possible design, the row arbitration circuit includes a subarbiter and a processor. The processor is configured to: receive the first signal and the at least one third signal that are sent by the processing circuit, generate a first request signal based on the first signal, and generate a second request signal based on the third signal. The subarbiter is configured to: determine, based on the first request signal and the second request signal that are sent by the processor, a second sequence of sending a response signal of the first request signal and a response signal of the second request signal to the processor, and send the response signal of the first request signal and the response signal of the second request signal to the processor based on the second sequence. The processor is further configured to: after receiving the response signal that is sent by the subarbiter and that is of the first request signal, process the first signal to obtain the response signal of the first signal, and after receiving the response signal that is sent by the subarbiter and that is of the second request signal, process the third signal to obtain the response signal of the third signal.

In this application, the subarbiter and the processor are further obtained by dividing functions of the row arbitration circuit. The processor is used to receive the first signal and the at least one third signal, and the execution sequence of the first signal and the third signal is determined by using the subarbiter, so that a processing rate of the row arbitration circuit is increased.

In a possible design, the row arbitration circuit is specifically configured to determine, based on the row location information that is included in the first signal and that is of the first pixel group in the pixel array and row location information that is included in the third signal and that is of the second pixel group in the pixel array, the first sequence of sending the response signal of the first signal and the response signal of the third signal to the processing circuit. The signal execution sequence is determined based on row location information of pixel groups in the pixel array, so that output results of the pixel output circuit can have a spatial sequence in the pixel array.

According to a second aspect, this application further provides a dynamic vision sensor, including the chip and the pixel output circuit according to the first aspect and the partial design of the first aspect. A clock signal of a row arbitration circuit is synchronized with a clock signal of the pixel output circuit.

According to a third aspect, this application further provides a dynamic vision sensor, including the chip and the pixel output circuit according to the first aspect and the partial design of the first aspect. The pixel output circuit includes a row arbitration circuit and a column selection circuit, and a clock signal of the row arbitration circuit is synchronized with a clock signal of the column selection circuit. The row arbitration circuit is configured to: receive a first signal sent by a processing circuit in the chip, determine row location information of a first pixel group in a pixel array based on the first signal, and send the row location information of the first pixel group in the pixel array to the column selection circuit. The column selection circuit is configured to: receive a second signal sent by the processing circuit, receive the row location information that is sent by the row arbitration circuit and that is of the first pixel group in the pixel array, determine, based on the second signal, column location information of a pixel row in which the first pixel group is located, and output location information of the first pixel group in the pixel array.

In this application, an output rate is improved by synchronizing the clock signal of the row arbitration circuit with the clock signal of the column selection circuit. A result output by using the pixel group increases a quantity of pixels output by the dynamic vision sensor for one time, and has a low output delay. In addition, location information of a pixel group that is in the pixel array and in which a pixel whose light intensity value changes is located can be further accurately output.

In a possible design, the row arbitration circuit is further configured to: receive at least one third signal sent by the processing circuit, where the third signal indicates that a light intensity value of a second pixel group changes, and the second pixel group and the first pixel group belong to different pixel rows, separately generate a response signal of the first signal and a response signal of the third signal, determine a first sequence of sending the response signal of the first signal and the response signal of the third signal to the processing circuit, and send the response signal of the first signal and the response signal of the third signal to the processing circuit based on the first sequence. The processing circuit is further configured to: after receiving the response signal that is sent by the row arbitration circuit and that is of the first signal, send the second signal to the column selection circuit, and after receiving the response signal that is sent by the row arbitration circuit and that is of the third signal, send a fourth signal to the column selection circuit, where the fourth signal includes column location information of the pixel row in which the second pixel group is located.

In a possible design, the row arbitration circuit includes a subarbiter and a processor. The processor is configured to: receive the first signal and the at least one third signal that are sent by the processing circuit, generate a first request signal based on the first signal, and generate a second request signal based on the third signal. The subarbiter is configured to: determine, based on the first request signal and the second request signal that are sent by the processor, a second sequence of sending a response signal of the first request signal and a response signal of the second request signal to the processor, and send the response signal of the first request signal and the response signal of the second request signal to the processor based on the second sequence. The processor is further configured to: after receiving the response signal that is sent by the subarbiter and that is of the first request signal, process the first signal to obtain the response signal of the first signal, and after receiving the response signal that is sent by the subarbiter and that is of the second request signal, process the third signal to obtain the response signal of the third signal.

In a possible design, the row arbitration circuit is specifically configured to determine, based on the row location information that is included in the first signal and that is of the first pixel group in the pixel array and row location information that is included in the third signal and that is of the second pixel group in the pixel array, the first sequence of sending the response signal of the first signal and the response signal of the third signal to the processing circuit.

In a possible design, the row arbitration circuit is further configured to: determine, based on the row location information that is included in the first signal and that is of the first pixel group in the pixel array and row location information that is included in a third signal and that is of a second pixel group in the pixel array, a sequence of processing the first signal and the third signal, and process the first signal and the third signal based on the sequence. The third signal indicates that a light intensity value of the second pixel group changes, and the second pixel group and the first pixel group belong to different pixel rows.

In a possible design, the row arbitration circuit includes a subarbiter and a processor. The subarbiter is configured to determine, based on the row location information that is included in the first signal and that is of the first pixel group in the pixel array and the row location information that is included in the third signal and that is of the second pixel group in the pixel array, the sequence of processing the first signal and the third signal. The processor is configured to process the first signal and the third signal based on the sequence.

In a possible design, the column selection circuit includes a location cache module. The location cache module is configured to: cache the row location information of the first pixel group in the pixel array, and when cache space of the location cache module is less than data space of the row location information of the first pixel group in the pixel array, generate a cache failure signal. The row arbitration circuit is further configured to: receive the cache failure signal sent by the location cache module, determine a signal transmission rate based on the cache failure signal, receive a plurality of fifth signals sent by the processing circuit, where any fifth signal indicates that a light intensity value of a third pixel row in the pixel array changes, generate response signals of the plurality of fifth signals based on the plurality of fifth signals, and send the response signals of the plurality of fifth signals to the processing circuit at the signal transmission rate.

In this application, the location cache module in the column selection circuit generates the cache failure signal, so that the row arbitration circuit controls, based on the cache failure signal, a rate of sending a signal to the processing circuit.

In a possible design, the column selection circuit is specifically configured to: when outputting the location information of the first pixel group whose light intensity value changes in the pixel array, output a timestamp corresponding to the first pixel group. Further, spatial sequence accuracy of pixel information of pixels whose light intensity values change in the output pixel array may be determined.

According to a fourth aspect, this application further provides an electronic device, including the dynamic vision sensor according to the second aspect and any design of the second aspect, and the third aspect and any design of the third aspect.

According to a fifth aspect, this application further provides a method for outputting pixel information by a dynamic vision sensor, applied to the dynamic vision sensor according to the second aspect and any design of the second aspect, and the third aspect and any design of the third aspect. The method includes: when it is detected that a light intensity value of at least one pixel in a first pixel group changes, generating a first signal and a second signal, where the first pixel group is any pixel group in a pixel array; determining row location information of the first pixel group in the pixel array based on the first signal, and determining, based on the second signal, column location information of a pixel row in which the first pixel group is located; and outputting location information of the first pixel group in the pixel array based on the row location information of the first pixel group in the pixel array and the column location information of the pixel row in which the first pixel group is located.

In a possible design, after the generating a first signal and a second signal, the method further includes: determining a light intensity value of each pixel in the first pixel group based on the first signal or the second signal, and outputting the light intensity value of each pixel in the first pixel group.

In a possible design, the method further includes: when it is detected that a light intensity value of at least one pixel in a second pixel group changes, generating a third signal, where the second pixel group and the first pixel group belong to different pixel rows; determining row location information of the second pixel group in the pixel array based on the third signal; and determining, based on the row location information of the first pixel group and the row location information of the second pixel group in the pixel array, a sequence of outputting the first pixel group and the second pixel group.

In a possible design, the first signal is generated by using the following method: determining a pixel signal of each pixel in the first pixel group, where a pixel signal of a first pixel in the first pixel group indicates whether a light intensity value of the first pixel changes, and the first pixel is any pixel in the first pixel group; and performing logical computation on the pixel signal of each pixel in the first pixel group to obtain the first signal.

In a possible design, the method further includes: when outputting the location information of the first pixel group whose light intensity value changes in the pixel array, outputting a timestamp corresponding to the first pixel group.

According to a sixth aspect, this application further provides a pixel processing method, applied to the chip according to the first aspect and any design of the first aspect. The method includes: when it is detected that a light intensity value of at least one pixel in a first pixel group changes, generating a first signal, where the first signal includes row location information of the first pixel group in a pixel array, and the first pixel group is any pixel group in the pixel array; generating a second signal, where the second signal includes column location information of a pixel row in which the first pixel group is located; and sending the first signal and the second signal to a pixel output circuit, where the first signal and the second signal are used to enable the pixel output circuit to output location information of the first pixel group whose light intensity value changes in the pixel array.

In a possible design, a quantity of pixel groups included in each pixel row in the pixel array is determined in the following manner: for each preset initial quantity of groups, determining, based on a column quantity of the pixel array, a bit width of pixel data, and a quantity of first pixel groups in the pixel array, an amount of pixel data corresponding to the initial quantity of groups; and determining that an initial quantity of groups corresponding to a minimum amount of pixel data in each amount of pixel data is the quantity of pixel groups included in each pixel row.

In a possible design, the method further includes: when a changed light intensity value of a pixel in the first pixel group is greater than a preset threshold, determining that the light intensity value of the pixel changes. The preset threshold is any value from 5% of the pixel light intensity value to 30% of the pixel light intensity value.

In a possible design, the method further includes: sending a light intensity value of each pixel in the first pixel group to the pixel output circuit by using the first signal or the second signal, to enable the pixel output circuit to output the light intensity value of each pixel in the first pixel group.

In a possible design, the generating a first signal specifically includes: determining a pixel signal of each pixel in the first pixel group, where a pixel signal of a first pixel in the first pixel group indicates whether a light intensity value of the first pixel changes, and the first pixel is any pixel in the first pixel group; and performing logical computation on the pixel signal of each pixel in the first pixel group to obtain the first signal.

In a possible design, before the sending the second signal to a pixel output circuit, the method further includes: after sending the first signal to the pixel output circuit, receiving a response signal that is sent by the pixel output circuit and that is of the first signal. The sending the second signal to a pixel output circuit specifically includes: sending the second signal to the pixel output circuit based on the response signal of the first signal.

In a possible design, the method further includes: determining, based on the row location information that is included in the first signal and that is of the first pixel group in the pixel array and row location information that is included in a third signal and that is of a second pixel group in the pixel array, a sequence of processing the first signal and the third signal, and processing the first signal and the third signal based on the sequence. The third signal indicates that a light intensity value of the second pixel group changes, and the second pixel group and the first pixel group belong to different pixel rows.

According to a seventh aspect, this application further provides a pixel processing apparatus. The apparatus includes: a first generation module, configured to: when it is detected that a light intensity value of at least one pixel in a first pixel group changes, generate a first signal, where the first signal includes row location information of the first pixel group in a pixel array, and the first pixel group is any pixel group in the pixel array; a second generation module, configured to generate a second signal, where the second signal includes column location information of a pixel row in which the first pixel group is located; and a sending module, configured to send the first signal and the second signal to a pixel output circuit, where the first signal and the second signal are used to enable the pixel output circuit to output location information of the first pixel group whose light intensity value changes in the pixel array.

In a possible design, a quantity of pixel groups included in each pixel row in the pixel array is determined in the following manner: for each preset initial quantity of groups, determining, based on a column quantity of the pixel array, a bit width of pixel data, and a quantity of first pixel groups in the pixel array, an amount of pixel data corresponding to the initial quantity of groups; and determining that an initial quantity of groups corresponding to a minimum amount of pixel data in each amount of pixel data is the quantity of pixel groups included in each pixel row.

In a possible design, the first generation module is specifically configured to: when a changed light intensity value of a pixel in the first pixel group is greater than a preset threshold, determine that the light intensity value of the pixel changes. The preset threshold is any value from 5% of the pixel light intensity value to 30% of the pixel light intensity value.

In a possible design, the sending module is further configured to send a light intensity value of each pixel in the first pixel group to the pixel output circuit by using the first signal or the second signal, to enable the pixel output circuit to output the light intensity value of each pixel in the first pixel group.

In a possible design, the first generation module is specifically configured to: determine a pixel signal of each pixel in the first pixel group, where a pixel signal of a first pixel in the first pixel group indicates whether a light intensity value of the first pixel changes, and the first pixel is any pixel in the first pixel group; and perform logical computation on the pixel signal of each pixel in the first pixel group to obtain the first signal.

In a possible design, the sending module is specifically configured to: after sending the first signal to the pixel output circuit, receive a response signal that is sent by the pixel output circuit and that is of the first signal; and send the second signal to the pixel output circuit based on the response signal of the first signal.

In a possible design, the apparatus further includes: determining, based on the row location information that is included in the first signal and that is of the first pixel group in the pixel array and row location information that is included in a third signal and that is of a second pixel group in the pixel array, a sequence of processing the first signal and the third signal, and processing the first signal and the third signal based on the sequence. The third signal indicates that a light intensity value of the second pixel group changes, and the second pixel group and the first pixel group belong to different pixel rows.

According to an eighth aspect, this application further provides an apparatus for outputting pixel information by a dynamic vision sensor. The apparatus includes:
a generation module, configured to: when it is detected that a light intensity value of at least one pixel in a first pixel group changes, generate a first signal and a second signal, where the first pixel group is any pixel group in a pixel array; a determining module, configured to: determine row location information of the first pixel group in the pixel array based on the first signal, and determine, based on the second signal, column location information of a pixel row in which the first pixel group is located; and an output module, configured to output location information of the first pixel group in the pixel array based on the row location information of the first pixel group in the pixel array and the column location information of the pixel row in which the first pixel group is located.

In a possible design, the output module is further configured to: determine a light intensity value of each pixel in the first pixel group based on the first signal or the second signal, and output the light intensity value of each pixel in the first pixel group.

In a possible design, the apparatus further includes: when it is detected that a light intensity value of at least one pixel in a second pixel group changes, generating a third signal, where the second pixel group and the first pixel group belong to different pixel rows; determining row location information of the second pixel group in the pixel array based on the third signal; and determining, based on the row location information of the first pixel group and the row location information of the second pixel group in the pixel array, a sequence of outputting the first pixel group and the second pixel group.

In a possible design, the generation module is specifically configured to: determine a pixel signal of each pixel in the first pixel group, where a pixel signal of a first pixel in the first pixel group indicates whether a light intensity value of the first pixel changes, and the first pixel is any pixel in the first pixel group; and perform logical computation on the pixel signal of each pixel in the first pixel group to obtain the first signal.

In a possible design, the output module is further configured to: when outputting the location information of the first pixel group whose light intensity value changes in the pixel array, output a timestamp corresponding to the first pixel group.

According to a ninth aspect, this application provides a computer-readable storage medium. The computer-readable storage medium stores computer instructions, and when the computer instructions are executed by a dynamic vision sensor, the dynamic vision sensor may be enabled to perform the method according to any design of the fifth aspect.

According to a tenth aspect, this application provides a computer-readable storage medium. The computer-readable storage medium stores computer instructions, and when the computer instructions are executed by a chip, the chip may be enabled to perform the method according to any design of the sixth aspect.

According to an eleventh aspect, this application provides a computer program product. The computer program product includes computer instructions, and when the computer instructions are executed by a dynamic vision sensor, the dynamic vision sensor may be enabled to perform the method according to any design of the fifth aspect.

According to a twelfth aspect, this application provides a computer program product. The computer program product includes computer instructions, and when the computer instructions are executed by a chip, the chip may be enabled to perform the method according to any design of the sixth aspect.

For technical effects that can be achieved by any one of the possible designs of the second aspect to the twelfth aspect, refer to the descriptions of the technical effects that can be achieved by any possible design of the first aspect. Details are not described herein again.

### BRIEF DESCRIPTION OF DRAWINGS

FIG. 1 is a schematic diagram of output results of a frame-based output method in the conventional technology;
FIG. 2 is a schematic diagram of a structure of a chip according to an embodiment of this application;
FIG. 3 is a schematic diagram of pixel signals of pixels and a first signal according to an embodiment of this application;
FIG. 4 is a schematic diagram of a process of determining a first row signal according to an embodiment of this application;
FIG. 5 is a schematic diagram of signals of a pixel group and corresponding response signals according to an embodiment of this application;
FIG. 6 is a schematic diagram of a process of determining a second signal according to an embodiment of this application;
FIG. 7 is a schematic diagram of output results of a dynamic vision sensor according to an embodiment of this application;
FIG. 8 is a schematic diagram of a timestamp signal according to an embodiment of this application;
FIG. 9 is a schematic diagram of comparison of output results of a dynamic vision sensor according to an embodiment of this application;
FIG. 10 is a schematic diagram of an amount of pixel data output by a dynamic vision sensor when a horizontal coordinate is a quantity of pixel groups in each row, and a vertical coordinate is a data bit width of each pixel according to an embodiment of this application;
FIG. 11 is a schematic diagram of an amount of pixel data output by a dynamic vision sensor in three different application scenarios (a circle, a palm, and a street) in which a horizontal coordinate is a quantity of pixel groups in each row, and a vertical coordinate is a quantity of output pixel groups according to an embodiment of this application;
FIG. 12 is a schematic diagram of an amount of pixel data output by a dynamic vision sensor in three different application scenarios (a circle, a palm, and a street) in which K is different values according to an embodiment of this application;
FIG. 13 is a schematic diagram of output at a fixed frame rate and output at a non-fixed frame rate by a dynamic vision sensor according to an embodiment of this application;
FIG. 14 is a schematic diagram of comparison between output power consumption of two cases of output at a fixed frame rate and output at a non-fixed frame rate by a dynamic vision sensor according to an embodiment of this application; and
FIG. 15 is a schematic flowchart of a method for outputting pixel information by a dynamic vision sensor according to an embodiment of this application.

### DESCRIPTION OF EMBODIMENTS

To make a person of ordinary skill in the art better understand the technical solutions of this application, the following clearly and completely describes the technical solutions in embodiments of this application with reference to the accompanying drawings.

It should be noted that, the terms "first", "second", and the like in the specification, claims, and accompanying drawings of this application are intended to distinguish between similar objects but do not necessarily indicate a specific order or sequence. It should be understood that the data termed in such a way is interchangeable in proper circumstances, so that embodiments of this application described herein can be implemented in an order other than the order illustrated or described herein. Implementations described in the following example embodiments do not represent all implementations consistent with this application. On the contrary, the implementations are only examples of apparatuses and methods that are described in the appended claims in detail and that are consistent with some aspects of this application.

Currently, after a pixel array of a DVS receives an illumination signal and performs imaging, a pixel whose light intensity value changes is defined as an active pixel, and a pixel whose light intensity value does not change is defined as an inactive pixel. A DVS that outputs pixel information of an active pixel usually includes a row arbitration circuit and a column arbitration circuit.

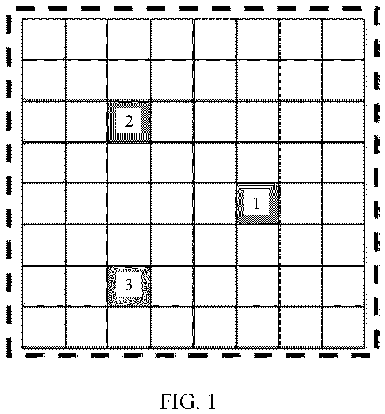

A method for outputting an active pixel by a frame-based DVS is outputting pixel information of each pixel in a pixel array by the DVS when a clock signal of the row arbitration circuit is synchronized with a clock signal of the column arbitration circuit. However, after the pixel information of the pixel array of the DVS is output, only the pixel information of the active pixel is valid information. Consequently, the DVS uses the frame-based output method to output a result of a large amount of data, and the output result is inaccurate. For example, FIG. 1 is a schematic diagram of output results of a frame-based output method. It is assumed that a pixel in a third row and third column location, a pixel in a fifth row and sixth column location, and a pixel in a seventh row and third column location in FIG. 1 are active pixels, and a time sequence in which the three pixels are activated is: the pixel in a fifth row and sixth column location (that is, a pixel numbered 1 in FIG. 1), the pixel in a third row and third column location (that is, a pixel numbered 2 in FIG. 1), and the pixel in a seventh row and third column location (that is, a pixel numbered 3 in FIG. 1). In this case, a dashed box indicates pixel information of each pixel in a pixel array that is actually output. In comparison with output results, of three active pixels, that are actually needed to be output, the result output by the DVS by using the frame-based output method has the large amount of data, and the output result is inaccurate.

In view of this, embodiments of this application provide a chip, a dynamic vision sensor, and a method for outputting pixel information. To make the objectives, technical solutions, and advantages of this application clearer, the following further describes this application in detail with reference to the accompanying drawings.

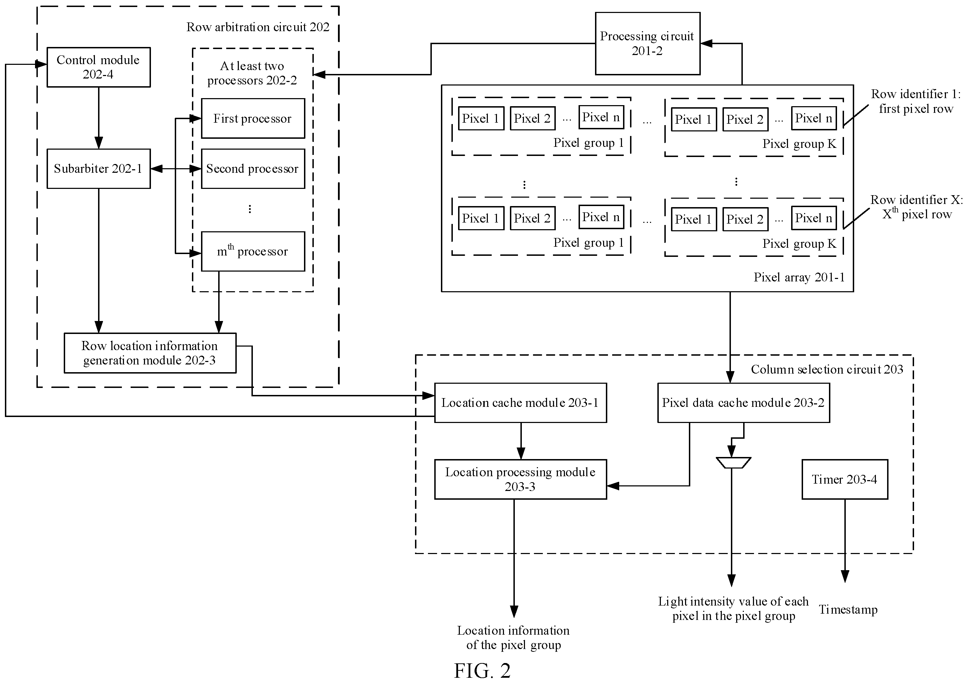

FIG. 2 is a schematic diagram of a structure of a chip according to an embodiment of this application. The chip includes a pixel array 201-1 and a processing circuit 201-2. Each pixel row in the pixel array 201-1 is divided into at least two pixel groups, and each pixel group includes a plurality of pixels. For example, the pixel array 201-1 in FIG. 2 includes X pixel rows, and pixels in each pixel row are divided into K pixel groups (that is, a pixel group 1, a pixel group 2, ..., and a pixel group K). Each pixel group includes n pixels. For example, each pixel group 1 includes a pixel 1, a pixel 2, ..., and a pixel n. X, K, and n are positive integers. A quantity of pixel groups in each pixel row in the pixel array is subsequently described in detail. Details are not described herein again.

The pixel array may include M*N pixels, M is a quantity of rows of the pixel array, N is a quantity of columns of the pixel array, and both M and N are positive integers. For example, the pixel array 201-1 is an 8-row and 9-column pixel array. M and N may be a same value, or may be different values.

When the pixel array 201-1 is irradiated by an illumination signal, for the processing circuit 201-2, when a light intensity value of at least one pixel in a first pixel group changes, a pixel signal of each pixel in the first pixel group is generated. The first pixel group is any pixel group in the pixel array 201-1. A pixel signal of a first pixel in the first pixel group may indicate whether a light intensity value of the first pixel changes, and the first pixel is any pixel in the first pixel group. The processing circuit 201-2 performs logical computation on the pixel signal of each pixel in the first pixel group to obtain a first signal. The first signal may indicate that a light intensity value of the first pixel group changes.

Optionally, when a changed light intensity value of a pixel in the first pixel group is greater than a preset threshold, it is determined that the light intensity value of the pixel changes. For example, the preset threshold is any value from 5% of the pixel light intensity value to 30% of the pixel light intensity value.

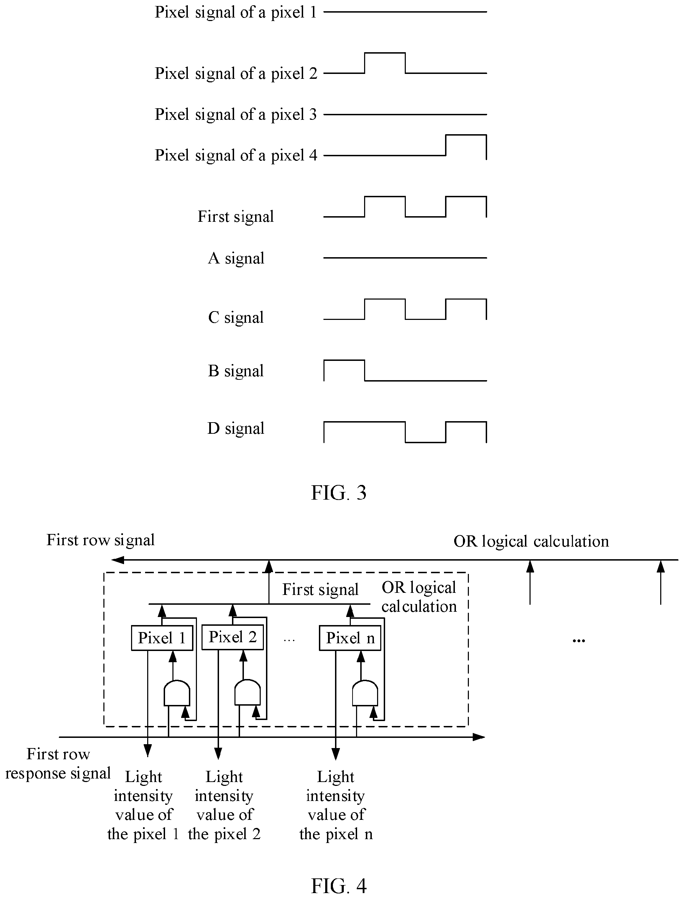

For example, it is assumed that the first pixel group is a pixel group 1 in a first pixel row in the pixel array 201-1 in FIG. 2. When n=4, the pixel group 1 includes four pixels: a pixel 1, a pixel 2, a pixel 3, and a pixel 4. When the pixel group 1 is irradiated by the illumination signal, light intensity values of the pixel 2 and the pixel 4 change, and light intensity values of the pixel 1 and the pixel 3 do not change, the processing circuit 201-2 generates a pixel signal of the pixel 2 and a pixel signal of the pixel 4 respectively for the pixel 2 and the pixel 4 whose light intensity values change. For example, the pixel signal of the pixel 2 and the pixel signal of the pixel 4 are shown in FIG. 3, to indicate that the light intensity values of the pixels change. The processing circuit 201-2 generates a pixel signal of the pixel 1 and a pixel signal of the pixel 3 respectively for the pixel 1 and the pixel 3 whose light intensity values do not change. For example, the pixel signal of the pixel 1 and the pixel signal of the pixel 3 are shown in FIG. 3, to indicate that the light intensity values of the pixels do not change.

Optionally, the processing circuit 201-2 separately performs OR logical computation on the pixel signal of each pixel in the first pixel group, to obtain the first signal. The first signal includes row location information of the first pixel group in the pixel array 201-1. For example, as shown in FIG. 4, OR logical computation is performed on the pixel signal of the pixel 1, the pixel signal of the pixel 2, the pixel signal of the pixel 3, and the pixel signal of the pixel 4, to obtain the first signal. The first signal is shown in FIG. 3. It is determined, by using the first signal, that the light intensity value of the pixel group 1 changes. After receiving a first row response signal corresponding to a first row signal, the processing circuit 201-2 may further perform AND logic calculation on the first row response signal and the first signal, and send calculation results to the pixel 1. A process of determining the first row response signal is subsequently described in detail. Details are not described herein again.

After determining the first signal of the first pixel group, the processing circuit 201-2 performs logical computation on the first signal and a third signal of at least one second pixel group, to obtain the first row signal. The first row signal may indicate that a light intensity value of the first pixel row changes, the third signal of any second pixel group may indicate whether a light intensity value of the second pixel group changes, and the first pixel group and the at least one second pixel group belong to a same pixel row. Optionally, the first row signal is obtained by performing OR logical computation on the first signal and the third signal of the at least one second pixel group. For a process of generating the third signal of any second pixel group, refer to a process of generating the first signal of the first pixel group. Details are not described herein again.

For example, the foregoing example continues to be used for description. It is assumed that the first pixel row of the pixel array 201-1 in FIG. 2 includes two pixel groups (the first pixel group and the second pixel group). In other words, when K=2, if the third signal of the second pixel group is shown by an A signal in FIG. 3, the third signal of the second pixel group indicates that the light intensity value of the second pixel group does not change. In this case, as shown in FIG. 4, the processing circuit 201-2 performs OR logical computation on the first signal and the A signal to obtain a C signal, and the C signal is the first row signal. It is determined, by using the C signal, that the first row signal indicates that the light intensity value of the first pixel row changes. The light intensity value of the first pixel group changes, and the light intensity value of the second pixel group does not change. If the third signal of the second pixel group is shown by a B signal in FIG. 3, the third signal of the second pixel group indicates that the light intensity value of the second pixel group changes. In this case, as shown in FIG. 4, the processing circuit 201-2 performs OR logical computation on the first signal and the B signal to obtain a D signal, and the D signal is the first row signal. It is determined, by using the D signal, that the first row signal indicates that the light intensity value of the first pixel row changes. The light intensity value of the first pixel group changes, and the light intensity value of the second pixel group also changes.

After determining the first signal of the first pixel group, the processing circuit 201-2 may further continue to generate a second signal. The second signal includes column location information of the pixel row in which the first pixel group is located. The first signal and the second signal are sent to a pixel output circuit, to enable the pixel output circuit to accurately output location information of the first pixel group whose light intensity value changes in the pixel array 201-1.

The first row signal may also include the row location information of the first pixel group in the pixel array 201-1, and the processing circuit 201-2 may also send the first row signal to the pixel output circuit.

Optionally, the processing circuit 201-2 may further send a light intensity value of each pixel in the first pixel group to the pixel output circuit by using the first signal or the second signal, to enable the pixel output circuit to further output the light intensity value of each pixel in the first pixel group. A more accurate output result may be obtained by combining the light intensity value of each pixel in the first pixel group with the location information of the first pixel group in the pixel array 201-1.

In a possible design, to more accurately control a rate of outputting a result by the pixel output circuit, the processing circuit 201-2 sends the second signal to the pixel output circuit in either of the following two manners.

Manner X: After sending the first signal to the pixel output circuit, the processing circuit 201-2 receives a response signal that is sent by the pixel output circuit and that is of the first signal, and sends the second signal to the pixel output circuit based on the response signal of the first signal.

The pixel output circuit in this manner includes a row arbitration circuit. A process of determining the response signal of the first signal by using the row arbitration circuit is the same as a process of determining the response signal of the first signal by using a row arbitration circuit included in the following chip. Details are not described herein again.

Manner Y: After receiving a response signal that is sent by the row arbitration circuit included in the chip and that is of the first signal, the processing circuit 201-2 sends the second signal to the pixel output circuit based on the response signal of the first signal.

In this manner, as shown in FIG. 2, the row arbitration circuit 202 included in the chip includes: a subarbiter 202-1 and at least two processors 202-2 (for example, a first processor, a second processor, ..., and an m^{th} processor), where m is a positive integer. First, the processing circuit 201-2 sends the first signal to the first processor in the at least two processors 202-2, and may further send the third signal to the second processor in the at least two processors 202-2. The third signal indicates that the light intensity value of the second pixel group changes, and the second pixel group and the first pixel group belong to different pixel rows.

It may be determined, by using the processing circuit 201-2, that a signal corresponding to each pixel group in the pixel array 201-1 is scheduled to a specified processor in the at least two processors 202-2.

For example, it is assumed that the pixel array 201-1 includes pixels of an 8*8 matrix, and each pixel row is divided into two pixel groups. The processing circuit 201-2 sends, to the first processor, all signals corresponding to pixel groups whose row identifiers are a first pixel row to a fourth pixel row in the pixel array 201-1, and sends, to the second processor, all signals corresponding to pixel groups whose row identifiers are a fifth pixel row to an eighth pixel row. If light intensity values of a pixel group A whose row identifier is the fifth pixel row and a pixel group B whose row identifier is the third pixel row change sequentially, the processing circuit 201-2 may send a row signal whose row identifier is the third pixel row or a first signal of the pixel group B to the first processor, and send a row signal whose row identifier is the fifth pixel row or a third signal of the pixel group A to the second processor.

Then, the first processor generates a first request signal based on the first signal, and sends the first request signal to the subarbiter 202-1. The first request signal indicates to process the first signal. In addition, the second processor generates a second request signal based on the third signal, and sends the second request signal to the subarbiter 202-1. The second request signal indicates to process the third signal. After receiving the first request signal sent by the first processor and the second request signal sent by the second processor, the subarbiter 202-1 first determines a sequence of sending a response signal of the first request signal to the first processor and a response signal of the second request signal to the second processor, and sends the response signal of the first request signal to the first processor and the response signal of the second request signal to the second processor based on the sequence.

In a possible embodiment, the first signal includes the row location information of the first pixel group in the pixel array 201-1, and the third signal includes row location information of the second pixel group in the pixel array 201-1. Alternatively, the first request signal includes the row location information of the first pixel group in the pixel array 201-1, and the second request signal includes row location information of the second pixel group in the pixel array 201-1.

The foregoing example is still used for description. For example, the row location information included in the first request signal is the third pixel row (a row identifier 3), and the row location information included in the second request signal is the fifth pixel row (a row identifier 5). Even if the subarbiter 202-1 first receives the second request signal, and receives the first request signal within a specified time period, the subarbiter 202-1 may determine a sequence of the first request signal and the second request signal in ascending order of row identifiers. In other words, the subarbiter 202-1 first sends the response signal of the first request signal to the first processor, and sends the response signal of the second request signal to the second processor. A sequence in which the subarbiter 202-1 sends response signals to different processors indicates a sequence in which request signals are processed. This implements sequential processing of signals of a plurality of pixel groups.

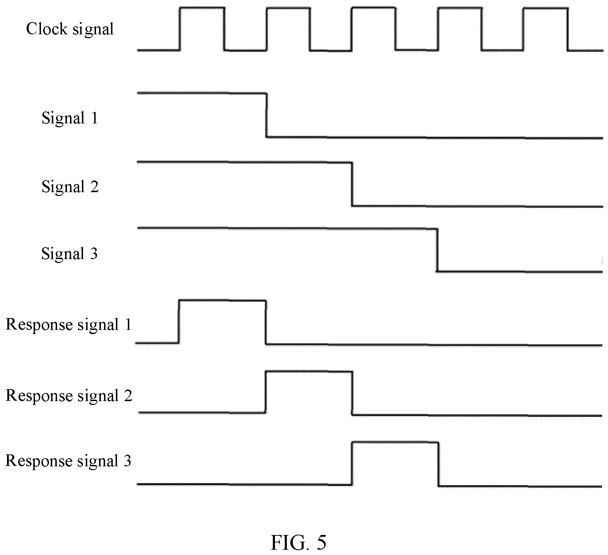

After receiving the response signal that is sent by the subarbiter 202-1 and that is of the first request signal, the first processor processes the first signal to obtain the response signal of the first signal, and sends the response signal of the first signal to the processing circuit 201-2. After receiving the response signal that is sent by the subarbiter 202-1 and that is of the second request signal, the second processor processes the third signal to obtain the response signal of the third signal, and sends the response signal of the third signal to the processing circuit 201-2. For example, as shown in FIG. 5, under an action of a clock signal of the row arbitration circuit 202, the first processor processes a signal 1 to obtain a response signal 1, the second processor processes a signal 2 to obtain a response signal 2, and the third processor processes a signal 3 to obtain a response signal 3. The first processor may not only process the signal 1, but also process the signal 2. This is merely an example in which the processor processes the signal.

After receiving the response signal that is sent by the first processor in the row arbitration circuit 202 in the chip and that is of the first signal, the processing circuit 201-2 generates the second signal based on the response signal of the first signal. The second signal includes the column location information of the pixel row in which the first pixel group is located and the light intensity value of each pixel in the first pixel group. The second signal is sent to the pixel output circuit. Herein, the pixel output circuit is a column selection circuit 203 in FIG. 2.

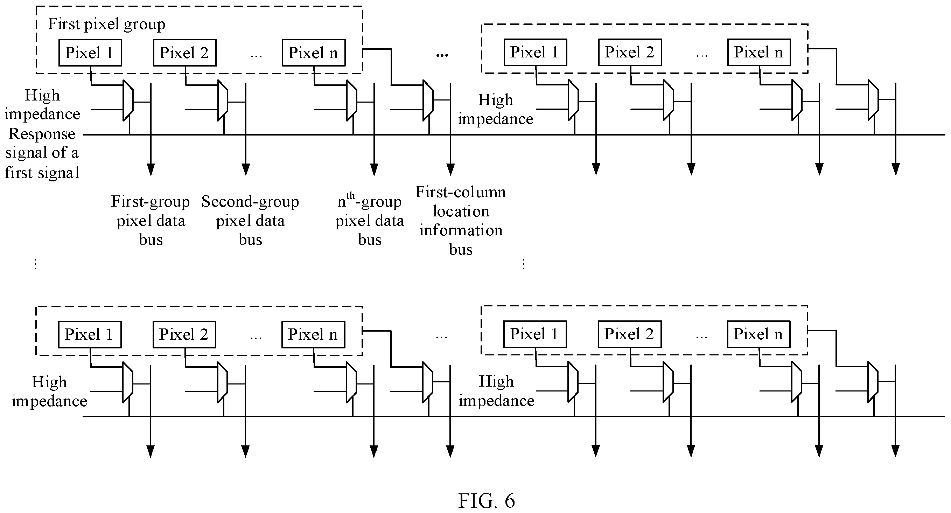

As shown in FIG. 6, a first-group pixel data bus is obtained after the light intensity value of the pixel 1 in the first pixel group, high impedance, and the response signal of the first signal are selected by a selector. Similarly, a second-group pixel data bus, ..., and an n^{th}-group pixel data bus may also be separately obtained after light intensity values of the pixel 2, ..., and the pixel n in the first pixel group, high impedance, and the response signal of the first signal are selected by the selector. A first-column location information bus is obtained after the column location information of the first pixel group, the high impedance, and the response signal of the first signal are selected by the selector. The processing circuit 201-2 connects the first-column location information bus and the first-group pixel data bus, the second-group pixel data bus, ..., and the n^{th}-group pixel data bus to each other to obtain the second signal. Similarly, the processing circuit 201-2 may further generate a fourth signal based on the response signal of the third signal. Details are not described herein again.

Optionally, after generating the second signal, the processing circuit 201-2 may further reset, based on the response signal of the first signal, a pixel whose light intensity value changes.

In a possible embodiment, as shown in FIG. 2, the row arbitration circuit 202 further includes a row location information generation module 202-3. The row location information generation module 202-3 determines the row location information of the first pixel group based on the first request signal, and sends the row location information of the first pixel group to the column selection circuit 203. The first request signal may be sent by the first processor, or may be sent by the subarbiter 202-1. For example, when the first request signal includes the row identifier 3, the row location information generation module 202-3 determines, based on the first request signal, that the row location information of the first pixel group is the third pixel row.

After receiving the second signal sent by the processing circuit 201-2 and the row location information that is sent by the row arbitration circuit 202 and that is of the first pixel group, the column selection circuit 203 determines the column location information of the first pixel group based on the second signal. Then, the light intensity value of each pixel in the first pixel group in the second signal is output, and the location information of the first pixel group in the pixel array is output. The location information includes the row location information of the first pixel row and the column location information of the first pixel group.

In this application, the pixel whose light intensity value changes is output by using the pixel group in the pixel array, so that the more accurate output result can be obtained. The pixel groups are easily restored to a frame form of the pixel array based on spatially sequential output results of pixel rows in the pixel array. This facilitates subsequent processing on the output result by using a frame-based processing algorithm. A signal execution sequence is determined based on row location information of the pixel groups in the pixel array, so that output results of the pixel output circuit can have a spatial sequence in the pixel array.

Based on the chip provided in this application, an embodiment of this application further provides a dynamic vision sensor. The dynamic vision sensor includes a chip and a pixel output circuit. The chip includes a pixel array and a processing circuit. The pixel output circuit includes a row arbitration circuit and a column selection circuit, and a clock signal of the row arbitration circuit is synchronized with a clock signal of the column selection circuit. Alternatively, the dynamic vision sensor includes a chip and a pixel output circuit. The chip includes a pixel array, a processing circuit, and a row arbitration circuit. The pixel output circuit includes a column selection circuit, and a clock signal of the row arbitration circuit is synchronized with a clock signal of the column selection circuit. Based on the above description, it may be understood that functions implemented by the row arbitration circuit may be the same in the two dynamic vision sensors.

The following uses an example in which the dynamic vision sensor includes the chip and the pixel output circuit, the chip includes the pixel array and the processing circuit, and the pixel output circuit includes the row arbitration circuit and the column selection circuit to describe a function implementation process of the column selection circuit in the pixel output circuit. As shown in FIG. 2, the column selection circuit 203 includes a location cache module 203-1, a pixel data cache module 203-2, and a location processing module 203-3. After receiving the row location information that is sent by the row arbitration circuit 202 and that is of the first pixel group, the location cache module 203-1 caches the row location information of the first pixel group, and sends the row location information of the first pixel group to the location processing module 203-3. After receiving the second signal sent by the processing circuit 201-2, the pixel data cache module 203-2 caches and outputs the light intensity value of each pixel in the first pixel group in the second signal; and may further determine the column location information of the first pixel group based on the second signal, and send the column location information of the first pixel group to the location processing module 203-3. The location processing module 203-3 outputs the location information of the first pixel group in the pixel array. The location information includes the row location information of the first pixel row and the column location information of the first pixel group.

For example, it is assumed that the row location information that is sent by the row arbitration circuit 202 and that is of the first pixel group is a fourth pixel row (a row identifier 4), the row location information of the first pixel group is cached in the location cache module 203-1. It is assumed that the second signal sent by the processing circuit 201-2 includes that the column location information of the first pixel group is a column identifier 4, and the light intensity value of the pixel 1, the light intensity value of the pixel 2, the light intensity value of the pixel 3, and the light intensity value of the pixel 4 that are in the first pixel group. In this case, the light intensity value of the pixel 1, the light intensity value of the pixel 2, the light intensity value of the pixel 3, and the light intensity value of the pixel 4 are cached in the pixel data cache module 203-2. In addition, the location processing module 203-3 outputs a fourth row and fourth column of the first pixel group located in the pixel array 201-1.

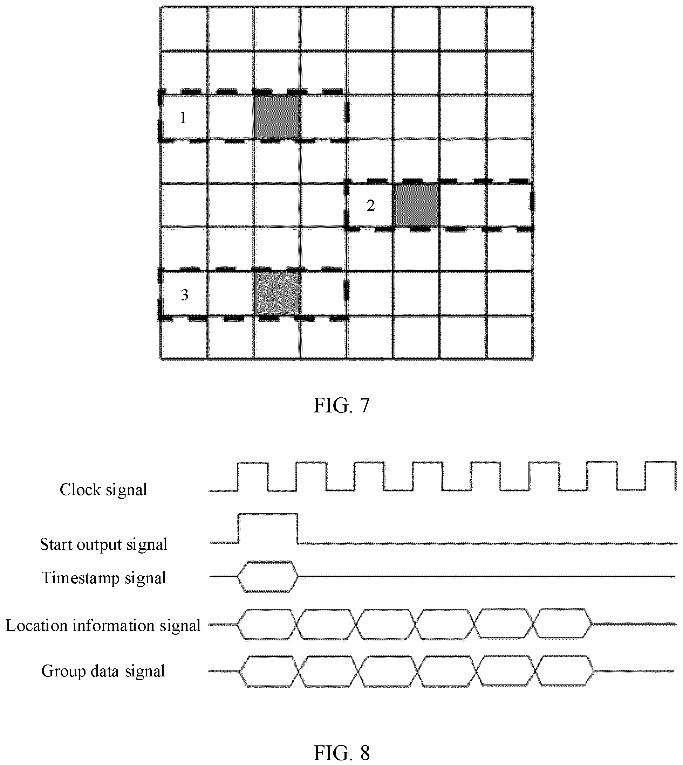

As shown in FIG. 7, the pixel array 201-1 includes the pixels of an 8*8 matrix. After the pixel array 201-1 is irradiated by the illumination signal, light intensity values of a pixel in a fifth row and sixth column, a pixel in a third row and third column, and a pixel in a seventh row and third column sequentially change. After each pixel row in the pixel array 201-1 is divided into two pixel groups, each pixel group includes four pixels. Based on a signal transmission process described above, the column selection circuit 203 first outputs location information of a pixel group (that is, a pixel group in which a dashed box numbered 1 in FIG. 7 is located) in which the pixel in a third row and third column is located, and a light intensity value of each pixel in the pixel group; outputs location information of a pixel group (that is, a pixel group in which a dashed box numbered 2 in FIG. 7 is located) in which the pixel in a fifth row and sixth column is located, and a light intensity value of each pixel in the pixel group; and finally outputs location information of a pixel group (that is, a pixel group in which a dashed box numbered 3 in FIG. 7 is located) in which the pixel in a seventh row and third column is located, and a light intensity value of each pixel in the pixel group.

An execution sequence of request signals of the at least two processors is determined by using the subarbiter, and the column selection circuit outputs results by using a pixel group, so that the output results of the dynamic vision sensor have a spatial sequence, and an amount of output data is reduced. The pixel groups are also easily restored to the frame form of the pixel array based on the output result of the dynamic vision sensor, so that the output result of the dynamic vision sensor is subsequently processed by synchronizing clock signals and by using the frame-based processing algorithm.

Optionally, as shown in FIG. 2, before the pixel data cache module 203-2 outputs the light intensity value of each pixel in the pixel group, data may be further selected by the selector.

In a possible embodiment, as shown in FIG. 2, the column selection circuit 203 further includes a timer 203-4. When the pixel data cache module 203-2 outputs the light intensity value of each pixel in the first pixel group in the second signal, a timestamp corresponding to the first pixel group is output by using the timer 203-4. A timestamp is set for an output pixel group, so that the output result of the dynamic vision sensor has a small amount of data.

As shown in FIG. 8, under an action of a clock signal of the column selection circuit 203, when the pixel data cache module 203-2 outputs group data and the location processing module 203-3 outputs location information, it indicates that a pixel group (that is, a start output signal in FIG. 8) starts to be output. In this case, the timer 203-4 outputs a corresponding timestamp (that is, a timestamp signal in FIG. 8). The clock signal of the column selection circuit 203 is synchronized with a clock signal of the row arbitration circuit 202. Table 1 shows that when the pixel array 201-1 includes pixel rows whose row identifiers are from 1 to N, each pixel row includes K pixel groups, and the dynamic vision sensor starts to output pixel groups this time, the timer 203-4 outputs a corresponding timestamp, and the dynamic vision sensor outputs location information of each pixel group and a light intensity value of each pixel in each pixel group.

**Table 1**

| Dynamic vision sensor starts to output the pixel groups this time | Timestamp |
|---|---|
| Location information 0 of the pixel group [log₂^{N}+log₂^{K-1:0}] | Light intensity value 0 of each pixel in the pixel group [2*N/K-1:0] |
| Location information 1 of the pixel group [log₂^{N}+log₂^{K-1:0}] | Light intensity value 1 of each pixel in the pixel group [2*N/K-1:0] |
| Location information 2 of the pixel group [log₂^{N}+log₂^{K-1:0}] | Light intensity value 2 of each pixel in the pixel group [2*N/K-1:0] |
| Location information 3 of the pixel group [log₂^{N}+log₂^{K-1:0}] | Light intensity value 3 of each pixel in the pixel group [2*N/K-1:0] |
| Location information 4 of the pixel group [log₂^{N}+log₂^{K-1:0}] | Light intensity value 4 of each pixel in the pixel group [2*N/K-1:0] |

In a possible embodiment, the row arbitration circuit 202 further includes a control module 202-4. When cache space of the location cache module 203-1 is less than data space of the row location information of the first pixel group, the location cache module 203-1 may further generate a first cache failure signal, and send the first cache failure signal to the control module 202-4; and/or when cache space of the pixel data cache module 203-2 is less than data space of the light intensity value of each pixel in the first pixel group in the second signal, the pixel data cache module 203-2 may further generate a second cache failure signal, and send the second cache failure signal to the control module 202-4.

After receiving the first cache failure signal and/or the second cache failure signal, the control module 202-4 first determines a signal transmission rate based on the first cache failure signal and/or the second cache failure signal, receives a plurality of fifth signals sent by the processing circuit 201-2, and generates response signals of the plurality of fifth signals based on the plurality of fifth signals. Any fifth signal indicates that a light intensity value of the third pixel row in the pixel array changes. Finally, the response signals of the plurality of fifth signals are sent to the processing circuit 201-2 at the signal transmission rate. Optionally, the signal transmission rate may be a fixed rate, or may be a non-fixed rate. When the signal transmission rate is the fixed rate, after current signal transmission ends, next signal transmission may be performed by waiting for specified duration. When the signal transmission rate is the non-fixed rate, after current signal transmission ends, next signal transmission may be directly performed.

The amount of data output by the dynamic vision sensor is controlled by controlling the signal transmission rate, to resolve a problem of sparse data output by the dynamic vision sensor in the conventional technology.

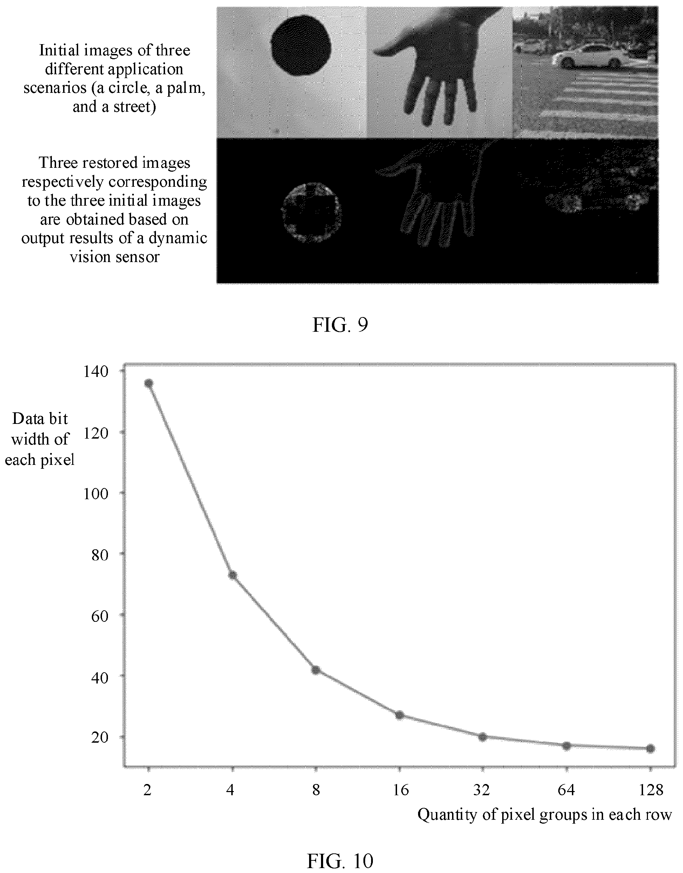

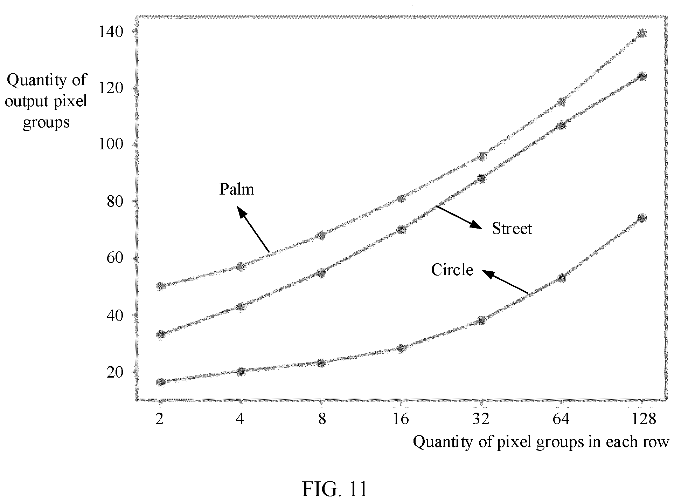

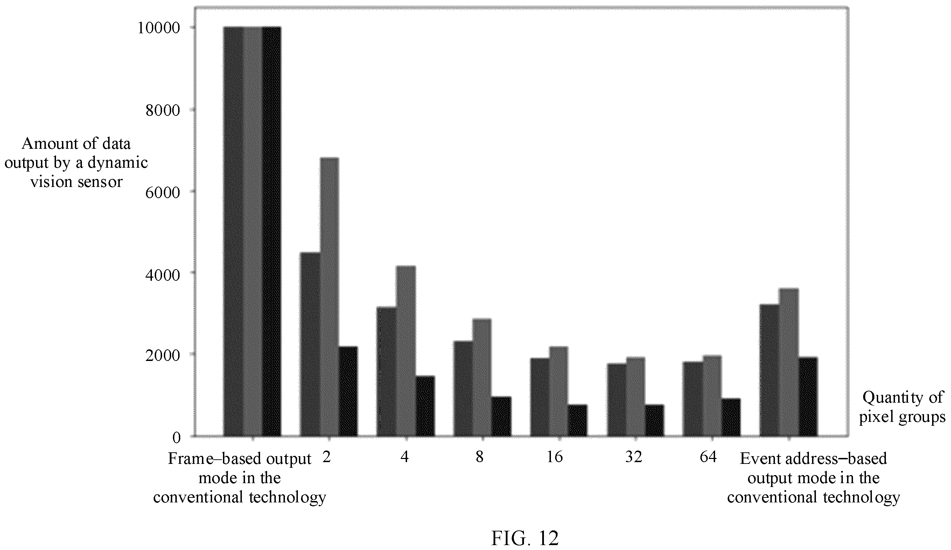

The following describes a process of determining a quantity of pixel groups in each pixel row in the pixel array. It is assumed that a quantity of pixels in each row in the pixel array 201-1 of the dynamic vision sensor is N=128, and each row includes K pixel groups. As shown in FIG. 9, initial images of three different application scenarios (a circle, a palm, and a street) are separately input into the dynamic vision sensor, and three restored images respectively corresponding to the three initial images are obtained based on output results of the dynamic vision sensor. FIG. 10 is a schematic diagram of an amount of pixel data output by the dynamic vision sensor when a horizontal coordinate is a quantity of pixel groups in each row, and a vertical coordinate is a data bit width of each pixel. It is assumed that the data bit width of each pixel is W, row location information of the pixel group is indicated by log₂^{N}, column location information of the pixel group is indicated by log₂^{K}, a data bit width of the pixel group is (N/K)*W, and a data bit width of a second signal is indicated by (log₂^{N}+log₂^{K}+(N/K)*W). It can be learned from FIG. 10 that a smaller K indicates a larger data bit width of the second signal. FIG. 11 is a schematic diagram of an amount of pixel data output by the dynamic vision sensor in three different application scenarios (a circle, a palm, and a street) in which a horizontal coordinate is a quantity of pixel groups in each row, and a vertical coordinate is a quantity of output pixel groups. It can be learned from FIG. 11 that a smaller K indicates a smaller quantity of pixel groups output by the dynamic vision sensor. In addition, an amount of data output by the dynamic vision sensor is a product of a quantity of pixel groups output by the dynamic vision sensor and a data bit width of a second signal of each pixel group. FIG. 12 is a schematic diagram of an amount of pixel data output by the dynamic vision sensor in three different application scenarios (a circle, a palm, and a street) in which K is different values. It can be learned from FIG. 12 that, when a value of K is any one of 8, 16, 32, or 64, the dynamic vision sensor outputs a small amount of pixel data. When K has different values, amounts of pixel data that are of the street, the palm, and the circle and that are output by the dynamic vision sensor are sequentially displayed in the schematic diagram from left to right. K corresponding to a minimum amount of pixel data in each amount of pixel data may be determined as a quantity of pixel groups included in each pixel row.

Table 2 shows comparison, in different pixel arrays, of output bandwidths and output delays of the dynamic vision sensor when a clock signal of a row arbitration circuit and a clock signal of a column selection circuit are synchronous or asynchronous. The output bandwidth is determined by a product of an output rate and a quantity of pixel groups output by the dynamic vision sensor for one time. The output rate is improved by synchronizing the clock signal of the row arbitration circuit with the clock signal of the column selection circuit. A quantity of pixel groups output by the dynamic vision sensor for one time is increased by outputting by using the pixel group, and therefore the output delay is low.

**Table 2**

| Pixel array | 128*128 | 128*128 | 240*180 | 1280*720 |
|---|---|---|---|---|
| Clock signal of the row arbitration circuit and the clock signal of the column selection circuit | Synchronous | Asynchronous | Asynchronous | The row arbitration circuit is asynchronous, and the column selection circuit is synchronous |
| Output delay | Minimum: 70 ns | Minimum: 15 µs | Minimum: 3 µs | Minimum: 1 µs |
| | Maximum: 10 µs | | | |
| Output rate | Minimum: 100 M | N/A | Maximum: 50 M | Maximum: 1066 M |
| | Maximum: 1600 M | | | |

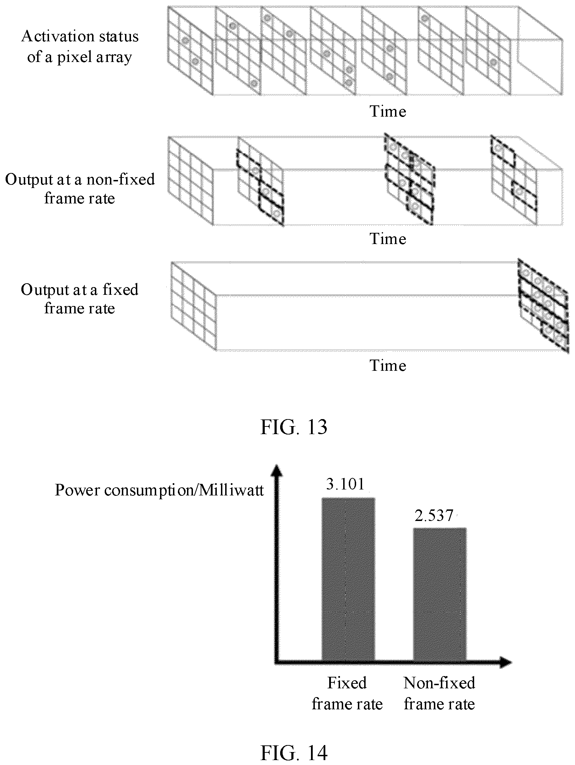

FIG. 13 is a schematic output diagram of two cases of output at a fixed frame rate and output at a non-fixed frame rate by the dynamic vision sensor when different pixels in the pixel array of the dynamic vision sensor are activated for a plurality of times. It can be learned from FIG. 13 that the output delay is low in the case of the output at a non-fixed frame rate by the dynamic vision sensor. FIG. 14 is a schematic diagram of comparison between output power consumption of the two cases of the output at a fixed frame rate and the output at a non-fixed frame rate by the dynamic vision sensor. It can be learned from FIG. 14 that the power consumption is low in the case of the output at a fixed frame rate by the dynamic vision sensor. The output frame rate of the dynamic vision sensor is controlled by controlling the signal transmission rate, so that both cases of the output at a fixed frame rate and the output at a non-fixed frame rate can be implemented.

Based on the foregoing dynamic vision sensor embodiments, an embodiment of this application further provides an electronic device, including the dynamic vision sensor in any design described above.

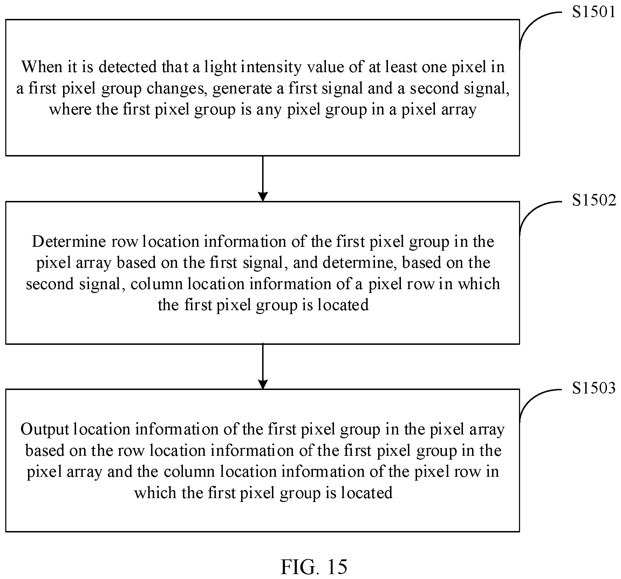

Based on the foregoing dynamic vision sensor embodiments, an embodiment of this application further provides a method for outputting pixel information by a dynamic vision sensor. The method may be performed by the dynamic vision sensor. As shown in FIG. 15, the method provided in this application includes the following steps.

S1501: When it is detected that a light intensity value of at least one pixel in a first pixel group changes, generate a first signal and a second signal, where the first pixel group is any pixel group in a pixel array.

S1502: Determine row location information of the first pixel group in the pixel array based on the first signal, and determine, based on the second signal, column location information of a pixel row in which the first pixel group is located.

S1503: Output location information of the first pixel group in the pixel array based on the row location information of the first pixel group in the pixel array and the column location information of the pixel row in which the first pixel group is located.

In a possible design, after the generating a first signal and a second signal in step S1501, the method further includes:

The dynamic vision sensor determines a light intensity value of each pixel in the first pixel group based on the first signal or the second signal, and outputs the light intensity value of each pixel in the first pixel group.

In a possible design, the method further includes:
When detecting that a light intensity value of at least one pixel in a second pixel group changes, the dynamic vision sensor generates a third signal, where the second pixel group and the first pixel group belong to different pixel rows; determines row location information of the second pixel group in the pixel array based on the third signal; and determines, based on the row location information of the first pixel group and the row location information of the second pixel group in the pixel array, a sequence of outputting the first pixel group and the second pixel group.

In a possible design, the first signal is generated by using the following method:
determining a pixel signal of each pixel in the first pixel group, where a pixel signal of a first pixel in the first pixel group indicates whether a light intensity value of the first pixel changes, and the first pixel is any pixel in the first pixel group; and performing logical computation on the pixel signal of each pixel in the first pixel group to obtain the first signal.

In a possible design, the method further includes:
When outputting the location information of the first pixel group whose light intensity value changes in the pixel array, the dynamic vision sensor outputs a timestamp corresponding to the first pixel group.

An embodiment of this application further provides a computer-readable storage medium. The computer-readable storage medium stores computer instructions. When the computer instructions are executed by a dynamic vision sensor, the dynamic vision sensor may be enabled to perform any method for outputting pixel information by a dynamic vision sensor in the foregoing design.

An embodiment of this application further provides a computer program product, including computer instructions. When the computer instructions are executed by a dynamic vision sensor, the dynamic vision sensor may be enabled to perform any method for outputting pixel information by a dynamic vision sensor in the foregoing design.

In other words, that the dynamic vision sensor provided in this application performs aspects of any method for outputting pixel information by a dynamic vision sensor in the foregoing design may alternatively be implemented in a form of a program product. The program product includes program code. When the program code is run on a computer device or a circuit product, the program code is used to enable the computer device to implement that the dynamic vision sensor described above in this specification performs any method for outputting pixel information by a dynamic vision sensor in the foregoing design.

In addition, although the operations of the methods in this application are described in a particular order in the accompanying drawings, this does not require or imply that these operations need to be performed in the particular order, or that all the operations shown need to be performed to achieve the desired results. Additionally or alternatively, some steps may be omitted, a plurality of steps may be combined into one step for execution, and/or one step may be broken down into a plurality of steps for execution.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

The computer program instructions may be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device. In this way, computer-implemented processing is generated. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A chip, comprising a pixel array and a processing circuit, wherein each pixel row in the pixel array comprises at least two pixel groups, and each pixel group comprises a plurality of pixels;
the processing circuit is configured to: when it is detected that a light intensity value of at least one pixel in a first pixel group changes, generate a first signal, wherein the first signal comprises row location information of the first pixel group in the pixel array, and the first pixel group is any pixel group in the pixel array; and
the processing circuit is further configured to: generate a second signal, wherein the second signal comprises column location information of a pixel row in which the first pixel group is located; and
send the first signal and the second signal to a pixel output circuit, wherein the first signal and the second signal are used to enable the pixel output circuit to output location information of the first pixel group whose light intensity value changes in the pixel array.

2. The chip according to claim 1, wherein a quantity of pixel groups comprised in each pixel row in the pixel array is determined in the following manner:
for each preset initial quantity of groups, determining, based on a column quantity of the pixel array, a bit width of pixel data, and a quantity of first pixel groups in the pixel array, an amount of pixel data corresponding to the initial quantity of groups; and
determining that an initial quantity of groups corresponding to a minimum amount of pixel data in each amount of pixel data is the quantity of pixel groups comprised in each pixel row.

3. The chip according to claim 1 or 2, wherein the pixel array comprises M*N pixels, M is a quantity of rows of the pixel array, N is a quantity of columns of the pixel array, and both M and N are positive integers.

4. The chip according to any one of claims 1 to 3, wherein the processing circuit is specifically configured to:
when a changed light intensity value of a pixel in the first pixel group is greater than a preset threshold, determine that the light intensity value of the pixel changes, wherein the preset threshold is any value from 5% of the pixel light intensity value to 30% of the pixel light intensity value.

5. The chip according to any one of claims 1 to 4, wherein the first signal of the processing circuit indicates that the light intensity value of the first pixel group changes.

6. The chip according to any one of claims 1 to 5, wherein the processing circuit is specifically configured to:
send a light intensity value of each pixel in the first pixel group to the pixel output circuit by using the first signal or the second signal, to enable the pixel output circuit to output the light intensity value of each pixel in the first pixel group.

7. The chip according to any one of claims 1 to 6, wherein the processing circuit is specifically configured to:
determine a pixel signal of each pixel in the first pixel group, wherein a pixel signal of a first pixel in the first pixel group indicates whether a light intensity value of the first pixel changes, and the first pixel is any pixel in the first pixel group; and
perform logical computation on the pixel signal of each pixel in the first pixel group to obtain the first signal.

8. The chip according to any one of claims 1 to 7, wherein the processing circuit is specifically configured to:
after sending the first signal to the pixel output circuit, receive a response signal that is sent by the pixel output circuit and that is of the first signal; and
send the second signal to the pixel output circuit based on the response signal of the first signal.

9. The chip according to any one of claims 1 to 8, wherein the chip further comprises a row arbitration circuit, wherein
the row arbitration circuit is configured to: determine, based on the row location information that is comprised in the first signal and that is of the first pixel group in the pixel array and row location information that is comprised in a third signal and that is of a second pixel group in the pixel array, a sequence of processing the first signal and the third signal; and
process the first signal and the third signal based on the sequence, wherein
the third signal indicates that a light intensity value of the second pixel group changes, and the second pixel group and the first pixel group belong to different pixel rows.

10. The chip according to claim 9, wherein the row arbitration circuit comprises a subarbiter and a processor, wherein
the subarbiter is configured to determine, based on the row location information that is comprised in the first signal and that is of the first pixel group in the pixel array and the row location information that is comprised in the third signal and that is of the second pixel group in the pixel array, the sequence of processing the first signal and the third signal; and
the processor is configured to process the first signal and the third signal based on the sequence.

11. The chip according to any one of claims 1 to 8, wherein the chip further comprises a row arbitration circuit, wherein
the row arbitration circuit is configured to: receive the first signal and at least one third signal that are sent by the processing circuit, wherein the third signal indicates that a light intensity value of a second pixel group changes, and the second pixel group and the first pixel group belong to different pixel rows;
separately generate the response signal of the first signal and a response signal of the third signal;
determine a first sequence of sending the response signal of the first signal and the response signal of the third signal to the processing circuit; and
send the response signal of the first signal and the response signal of the third signal to the processing circuit based on the first sequence, to enable the processing circuit to send the second signal to the pixel output circuit; and send a fourth signal to the pixel output circuit, wherein the fourth signal comprises column location information of the pixel row in which the second pixel group is located.

12. The chip according to claim 11, wherein the row arbitration circuit comprises a subarbiter and a processor, wherein
the processor is configured to: receive the first signal and the at least one third signal that are sent by the processing circuit, generate a first request signal based on the first signal, and generate a second request signal based on the third signal;
the subarbiter is configured to: determine, based on the first request signal and the second request signal that are sent by the processor, a second sequence of sending a response signal of the first request signal and a response signal of the second request signal to the processor, and send the response signal of the first request signal and the response signal of the second request signal to the processor based on the second sequence; and
the processor is further configured to: after receiving the response signal that is sent by the subarbiter and that is of the first request signal, process the first signal to obtain the response signal of the first signal, and after receiving the response signal that is sent by the subarbiter and that is of the second request signal, process the third signal to obtain the response signal of the third signal.

13. The chip according to claim 11 or 12, wherein the row arbitration circuit is specifically configured to:
determine, based on the row location information that is comprised in the first signal and that is of the first pixel group in the pixel array and row location information that is comprised in the third signal and that is of the second pixel group in the pixel array, the first sequence of sending the response signal of the first signal and the response signal of the third signal to the processing circuit.

14. A dynamic vision sensor, comprising the chip and the pixel output circuit according to claim 9 or 10 or any one of claims 11 to 13, wherein a clock signal of a row arbitration circuit is synchronized with a clock signal of the pixel output circuit.

15. A dynamic vision sensor, comprising the chip and the pixel output circuit according to any one of claims 1 to 8, wherein the pixel output circuit comprises a row arbitration circuit and a column selection circuit, and a clock signal of the row arbitration circuit is synchronized with a clock signal of the column selection circuit;
the row arbitration circuit is configured to: receive a first signal sent by a processing circuit in the chip, determine row location information of a first pixel group in a pixel array based on the first signal, and send the row location information of the first pixel group in the pixel array to the column selection circuit; and
the column selection circuit is configured to: receive a second signal sent by the processing circuit, receive the row location information that is sent by the row arbitration circuit and that is of the first pixel group in the pixel array, determine, based on the second signal, column location information of a pixel row in which the first pixel group is located, and output location information of the first pixel group in the pixel array.

16. The dynamic vision sensor according to claim 15, wherein
the row arbitration circuit is further configured to: receive at least one third signal sent by the processing circuit, wherein the third signal indicates that a light intensity value of a second pixel group changes, and the second pixel group and the first pixel group belong to different pixel rows, separately generate a response signal of the first signal and a response signal of the third signal, determine a first sequence of sending the response signal of the first signal and the response signal of the third signal to the processing circuit, and send the response signal of the first signal and the response signal of the third signal to the processing circuit based on the first sequence; and
the processing circuit is further configured to: after receiving the response signal that is sent by the row arbitration circuit and that is of the first signal, send the second signal to the column selection circuit, and after receiving the response signal that is sent by the row arbitration circuit and that is of the third signal, send a fourth signal to the column selection circuit, wherein the fourth signal comprises column location information of the pixel row in which the second pixel group is located.

17. The dynamic vision sensor according to claim 15 or 16, wherein the row arbitration circuit comprises a subarbiter and a processor, wherein
the processor is configured to: receive the first signal and the at least one third signal that are sent by the processing circuit, generate a first request signal based on the first signal, and generate a second request signal based on the third signal;
the subarbiter is configured to: determine, based on the first request signal and the second request signal that are sent by the processor, a second sequence of sending a response signal of the first request signal and a response signal of the second request signal to the processor, and send the response signal of the first request signal and the response signal of the second request signal to the processor based on the second sequence; and
the processor is further configured to: after receiving the response signal that is sent by the subarbiter and that is of the first request signal, process the first signal to obtain the response signal of the first signal, and after receiving the response signal that is sent by the subarbiter and that is of the second request signal, process the third signal to obtain the response signal of the third signal.

18. The dynamic vision sensor according to claim 16 or 17, wherein the row arbitration circuit is specifically configured to:
determine, based on the row location information that is comprised in the first signal and that is of the first pixel group in the pixel array and row location information that is comprised in the third signal and that is of the second pixel group in the pixel array, the first sequence of sending the response signal of the first signal and the response signal of the third signal to the processing circuit.

19. The dynamic vision sensor according to claim 15, wherein
the row arbitration circuit is further configured to: determine, based on the row location information that is comprised in the first signal and that is of the first pixel group in the pixel array and row location information that is comprised in a third signal and that is of a second pixel group in the pixel array, a sequence of processing the first signal and the third signal, and process the first signal and the third signal based on the sequence, wherein the third signal indicates that a light intensity value of the second pixel group changes, and the second pixel group and the first pixel group belong to different pixel rows.

20. The dynamic vision sensor according to claim 19, wherein the row arbitration circuit comprises a subarbiter and a processor, wherein
the subarbiter is configured to determine, based on the row location information that is comprised in the first signal and that is of the first pixel group in the pixel array and the row location information that is comprised in the third signal and that is of the second pixel group in the pixel array, the sequence of processing the first signal and the third signal; and
the processor is configured to process the first signal and the third signal based on the sequence.

21. The dynamic vision sensor according to any one of claims 15 to 18, wherein the column selection circuit comprises a location cache module;
the location cache module is configured to:
cache the row location information of the first pixel group in the pixel array, and
when cache space of the location cache module is less than data space of the row location information of the first pixel group in the pixel array, generate a cache failure signal; and
the row arbitration circuit is further configured to: receive the cache failure signal sent by the location cache module, determine a signal transmission rate based on the cache failure signal, receive a plurality of fifth signals sent by the processing circuit, wherein any fifth signal indicates that a light intensity value of a third pixel row in the pixel array changes, generate response signals of the plurality of fifth signals based on the plurality of fifth signals, and send the response signals of the plurality of fifth signals to the processing circuit at the signal transmission rate.

22. The dynamic vision sensor according to any one of claims 15 to 18, wherein the column selection circuit is specifically configured to:
when outputting the location information of the first pixel group whose light intensity value changes in the pixel array, output a timestamp corresponding to the first pixel group.

23. An electronic device, comprising the dynamic vision sensor according to any one of claims 14 to 22.

24. A method for outputting pixel information by a dynamic vision sensor, applied to the dynamic vision sensor according to any one of claims 14 to 22, wherein the method comprises:
when it is detected that a light intensity value of at least one pixel in a first pixel group changes, generating a first signal and a second signal, wherein the first pixel group is any pixel group in a pixel array;
determining row location information of the first pixel group in the pixel array based on the first signal, and determining, based on the second signal, column location information of a pixel row in which the first pixel group is located; and
outputting location information of the first pixel group in the pixel array based on the row location information of the first pixel group in the pixel array and the column location information of the pixel row in which the first pixel group is located.

25. The method according to claim 24, wherein after the generating a first signal and a second signal, the method further comprises:
determining a light intensity value of each pixel in the first pixel group based on the first signal or the second signal, and outputting the light intensity value of each pixel in the first pixel group.

26. The method according to claim 24 or 25, wherein the method further comprises:
when it is detected that a light intensity value of at least one pixel in a second pixel group changes, generating a third signal, wherein the second pixel group and the first pixel group belong to different pixel rows;
determining row location information of the second pixel group in the pixel array based on the third signal; and
determining, based on the row location information of the first pixel group and the row location information of the second pixel group in the pixel array, a sequence of outputting the first pixel group and the second pixel group.

27. The method according to any one of claims 24 to 26, wherein the first signal is generated by using the following method:
determining a pixel signal of each pixel in the first pixel group, wherein a pixel signal of a first pixel in the first pixel group indicates whether a light intensity value of the first pixel changes, and the first pixel is any pixel in the first pixel group; and
performing logical computation on the pixel signal of each pixel in the first pixel group to obtain the first signal.

28. The method according to any one of claims 24 to 27, wherein the method further comprises:
when outputting the location information of the first pixel group whose light intensity value changes in the pixel array, outputting a timestamp corresponding to the first pixel group.
